# EUROPÄISCHE PATENTANMELDUNG

(11) **EP 2 191 881 A1**
(43) Veröffentlichungstag der Anmeldung: **02.06.2010**
(21) Anmeldenummer: 09177140.2
(22) Anmeldetag: 26.11.2009
(51) Int. Cl.: B01D 33/067, B01D 33/073, B01D 33/27, B01D 33/46

(54) **Filtriervorrichtung**

(30) Priorität: 28.11.2008 DE 102008059597
(71) Anmelder: Mahle International GmbH, 70376 Stuttgart (DE)
(72) Erfinder: Geisbauer, Heinz, 74629, Pfedelbach (DE)
(74) Vertreter: Bernhard, Uwe

(57) **Zusammenfassung**

Die vorliegende Erfindung betrifft eine Filtriervorrichtung (1) zum Entfernen von Verunreinigungen aus Flüssigkeiten und/oder Pasten, insbesondere hoher Viskosität, mit mindestens einem zylindrischen Filterkörper (2), der einen zylindrischen Stützkörper (3) und eine Lochfolie (4) als Filtermaterial aufweist, und mit einer Abstreifeinrichtung (7) zum Abstreifen von sich im Betrieb der Filtriervorrichtung (1) rohseitig an der Lochfolie (4) anlagernden Verunreinigungen (8).

Um die Gefahr einer Beschädigung der Lochfolie (4) zu reduzieren, weist der Stützkörper (3) in Umfangsrichtung (16) verteilt mehrere radial nach außen vorstehende Axialstege (10) auf, auf welche die Lochfolie (4) von außen so aufgespannt ist, dass sie zwischen den Axialstegen (10) einen Abstand von der Längsmittelachse (14) aufweist, der kleiner ist als ein Abstand (15), den die Lochfolie (4) an den Axialstegen (10) von der Längsmittelachse (11) aufweist.

## Beschreibung

Die vorliegende Erfindung betrifft eine Filtriervorrichtung zum Entfernen von Verunreinigungen aus Flüssigkeiten, insbesondere hoher Viskosität, und/oder aus Pasten.

Filtriervorrichtungen dieser Art kommen beispielsweise zum Reinigen von Klebstoffen und Dichtstoffen zum Einsatz. Sie können auch zum Filtern pastöser Stoffe verwendet werden, wie zum Beispiel bitumenhaltiger Unterbodenschutz, Hohlraumversiegelungen und Schweißnahtabdeckungen sowie Dämmstoffe.

Üblicherweise kann eine solche Filtriervorrichtung zumindest einen zylindrischen Filterkörper aufweisen, der einen Rohraum von einem Reinraum trennt. Moderne Filterkörper besitzen als Filtermaterial eine Lochfolie, die auf einen zylindrischen Stützkörper aufgebracht ist. Im Betrieb der Filtriervorrichtung lagern sich rohseitig an der Lochfolie Verunreinigungen an, die im Laufe der Zeit einen anwachsenden Filterkuchen bilden. Hierdurch nimmt der Durchströmungswiderstand des Filterkörpers stark zu, so dass eine Abreinigung dieser Verunreinigungen erforderlich ist. Hierzu sind Abstreifeinrichtungen bekannt, die im Betrieb der Filtriervorrichtung die sich an der Lochfolie anlagernden Verunreinigungen abstreifen.

Beim Betrieb derartiger Filtriervorrichtungen hat sich gezeigt, dass die an der Lochfolie anliegenden Abstreifer Wellen und Falten in der Lochfolie erzeugen, wodurch Wulste entstehen können. Hierdurch wird die Reinigungswirkung der Abstreifer beeinträchtigt, was mit einer reduzierten Filtrierleistung einhergeht. Darüber hinaus besteht die Gefahr einer Zerstörung der Abstreifer und/oder der Lochfolie.

Die vorliegende Erfindung beschäftigt sich mit dem Problem, für eine Filtriervorrichtung der eingangs genannten Art eine verbesserte Ausführungsform anzugeben, die sich insbesondere dadurch auszeichnet, dass die Gefahr einer Beschädigung der Lochfolie reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, den Stützkörper an seiner Außenseite mit Axialstegen auszustatten und die Lochfolie unter Vorspannung auf diese Axialstege aufzubringen, insbesondere aufzuziehen. Dabei ist die Vorspannung so groß zu wählen, dass die Lochfolie zwischen benachbarten Längsstegen einen kleineren Abstand von der Längsmittelachse des Stützkörpers aufweist als an den Längsstegen. Es hat sich gezeigt, dass bei einer derart aufgespannten Lochfolie im Betrieb keine Wellen und Falten entstehen, wodurch die Gefahr einer Beschädigung der Lochfolie reduziert ist. Die Erfindung beruht hierbei auf der Überlegung, dass bei einer herkömmlichen Vorgehensweise stets ein Radialspiel zwischen Lochfolie und Stützkörper vorhanden ist. Dieses Radialspiel führt dazu, dass der jeweilige Abstreifer die Lochfolie gegen den Stützkörper andrückt, wodurch eine Welle entsteht. Dies kann dann zur unerwünschten Faltenbildung und Zerstörung der Lochfolie führen. Durch die vorgeschlagene Vorspannung der Lochfolie kann ein derartiges Spiel vollständig eliminiert werden. In der Folge ist die Gefahr einer Faltenbildung stark reduziert.

Entsprechend einer vorteilhaften Ausführungsform kann die Lochfolie so auf den Stützkörper aufgespannt sein, dass sie sich in der Umfangsrichtung zwischen den Axialstegen im Wesentlichen geradlinig erstreckt oder zumindest einen geradlinigen Umfangsabschnitt aufweist. Diese geradlinigen Umfangsabschnitte der Lochfolie zwischen benachbarten Axialstegen führen außerdem dazu, dass beim Andrücken der Abstreifer gegen die Lochfolie diese zusätzlich gespannt wird. Auch dies reduziert die Gefahr einer Wellen- und Faltenbildung.

Besonders vorteilhaft ist nun eine Weiterbildung, bei welcher die Abstreifeinrichtung so ausgestaltet ist, dass sie der in der Umfangsrichtung radial variierenden Außenkontur der Lochfolie folgen kann. Beispielsweise können hierzu Abstreifer vorgesehen sein, die in Radialrichtung federelastisch ausgestaltet sind oder mittels einer federelastischen Halterung vorgespannt sind. Durch diese Maßnahme kann die Reinigungswirkung der Abstreifer verbessert werden.

Bevorzugt ist dabei eine Ausführungsform, bei der die Abstreifeinrichtung mehrere in Umfangsrichtung verteilt angeordnete Abstreifer aufweist, wodurch eine intensive Abreinigung realisierbar ist, bei welcher der Filterkörper keine volle Umdrehung durchführen muss, um vollständig abgereinigt zu werden.

Entsprechend einer besonders vorteilhaften Ausführungsform können die Abstreifer unterschiedliche Materialhärten aufweisen und/oder mit unterschiedlichen radialen Anpresskräften an der Lochfolie anliegen. Durch diese Maßnahmen kann die Abreinigungswirkung mit erhöhter Effektivität durchgeführt werden. Insbesondere eignen sich dann die Abstreifer zur Realisierung einer Grobreinigung und einer Feinreinigung sowie beliebiger Zwischenstufen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen vereinfachten Querschnitt einer Filtriervorrichtung,
- Fig. 2: eine Seitenansicht eines Filterkörpers,
- Fig. 3: ein vergrößertes Detail III aus Fig. 1,
- Fig. 4: ein vergrößertes Detail IV aus Fig. 2,
- Fig. 5 - 7: Ansichten wie in Fig. 4, jedoch bei anderen Ausführungsformen.

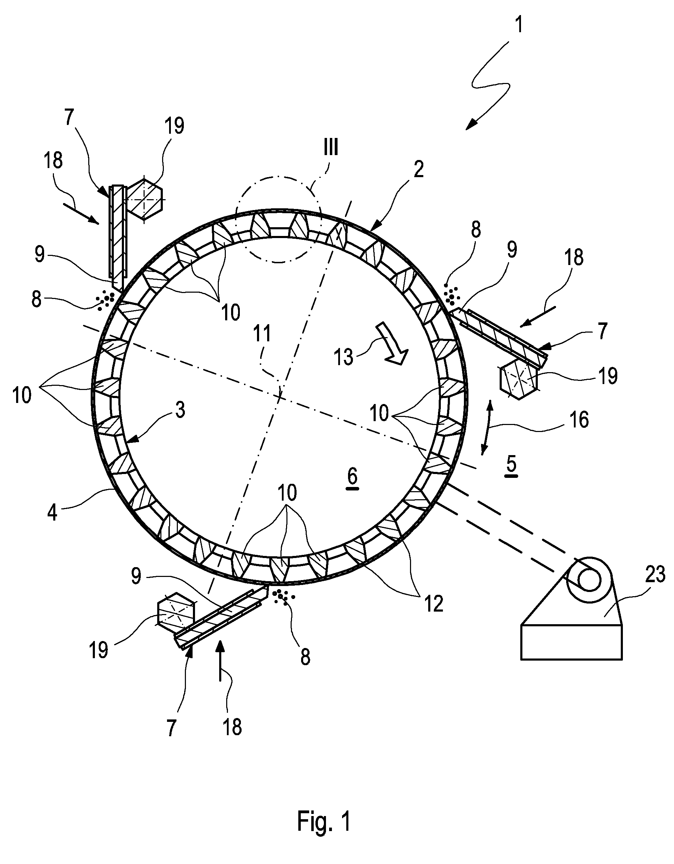

Entsprechend Fig. 1 umfasst eine Filtriervorrichtung 1 zumindest einen zylindrischen Filterkörper 2, der einen zylindrischen Stützkörper 3 sowie eine Lochfolie 4 als Filtermaterial aufweist. Der Filterkörper 2 trennt innerhalb der Filtriervorrichtung 1 einen Rohraum 5 von einem Reinraum 6. Der Rohraum 5 ist dabei außerhalb des Filterkörpers 2 angeordnet, während sich der Reinraum 6 im Inneren des Filterkörpers 2 befindet. Die Filtriervorrichtung 1 dient dabei zum Entfernen von Verunreinigungen, insbesondere Feststoffe, aus Flüssigkeiten bzw. pastösen Stoffen, wobei die Flüssigkeiten bzw. Pasten insbesondere vergleichsweise hohe Viskositäten aufweisen können.

Die Filtriervorrichtung 1 umfasst außerdem eine Abstreifeinrichtung 7, mit deren Hilfe im Betrieb der Filtriervorrichtung 1 Verunreinigungen 8, die sich im Betrieb der Filtriervorrichtung 1 rohseitig an der Lochfolie 4 anlagern, abgestreift werden können. Hierzu weist die Abstreifeinrichtung 7 zumindest einen Abstreifer 9 auf, der radial außen, also rohseitig an der Lochfolie 4 anliegt. Im gezeigten Beispiel sind - ohne Beschränkung der Allgemeinheit - genau drei derartige Abstreifer 9 vorgesehen, die in Umfangsrichtung verteilt angeordnet sind.

Der Stützkörper 3 ist ebenfalls zylindrisch ausgestaltet und weist mehrere Axialstege 10 auf, die sich parallel zur Längsmittelachse 11 des Filterkörpers 2 erstrecken und die in Umfangsrichtung, insbesondere gleichmäßig, verteilt angeordnet sind. Ferner stehen die Axialstege 10 radial nach außen ab. Die Lochfolie 4 umschließt den Stützkörper 3 und ist auf diesem so aufgebracht, dass sie an den außenliegenden Enden 12 der Axialstege 10 radial abgestützt ist. Bei der hier gezeigten Filtriervorrichtung 1 ist die Lochfolie 4 außerdem auf den Stützkörper 3 bzw. auf dessen Axialstege 10 von außen aufgespannt, und zwar derart, dass eine Wellenbildung durch die dagegen gedrückten Abstreifer 9 im Betrieb der Filtriervorrichtung 1 reduziert ist bzw. vermieden ist.

Zur Erzielung der Reinigungswirkung erfolgt eine relative Drehbewegung zwischen dem Filterkörper 2 und der Abstreifeinrichtung 7. In der Regel ist dabei die Abstreifeinrichtung 7 stationär in einem hier nicht gezeigten Gehäuse der Filtriervorrichtung 1 angeordnet, während der Filterkörper in diesem Gehäuse um seine Längsmittelachse 11 drehbar angeordnet ist. Ein entsprechender, hier vereinfacht dargestellter Drehantrieb 23 treibt dann den Filterkörper 2 drehend an. Diese Rotation des Filterkörpers 2 ist in Fig. 1 durch einen Pfeil angedeutet und mit 13 bezeichnet.

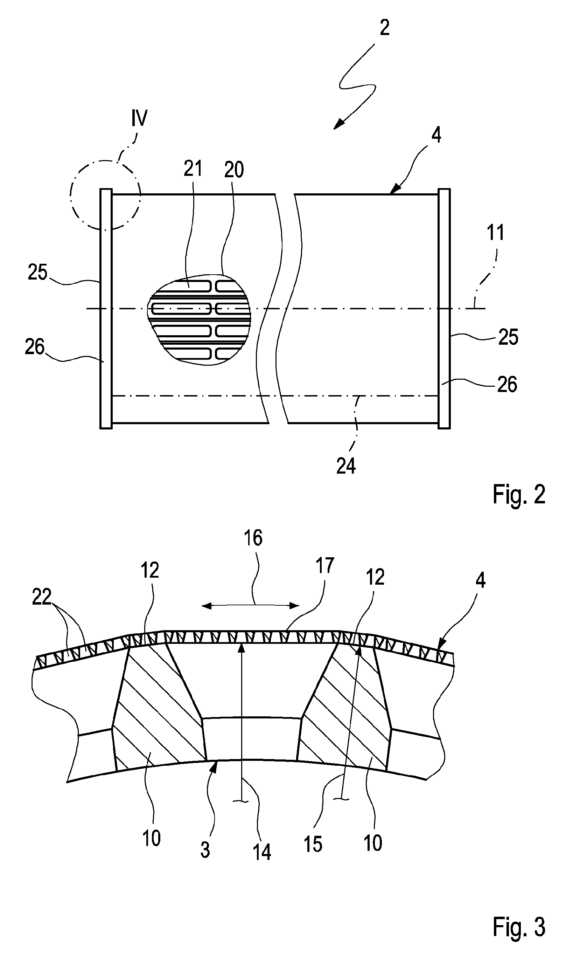

Bei der hier vorgestellten Filtriervorrichtung 1 ist die Lochfolie 4 auf den Stützkörper 3 bzw. auf dessen Axialstege 10 von außen aufgespannt, so dass die Lochfolie 4 mit radialer Vorspannung an den außenliegenden Enden 12 oder Außenseiten 12 der Axialstege 10 anliegt. Die Vorspannung der Lochfolie 4 ist dabei zumindest so groß, dass die Lochfolie 4 gemäß Fig. 3 zwischen den Axialstegen 10 einen Abstand 14 von der Längsmittelachse 11 des Stützkörpers 3 aufweist, der kleiner ist als ein Abstand 15, den die Lochfolie 4 im Bereich eines der Stege 10 von der Längsmittelachse 11 aufweist. Dieser Abstand 15 entspricht dem Abstand der Längsmittelachse 11 von der Außenseite 12 des jeweiligen Axialstegs 10. Besonders vorteilhaft ist dabei eine Ausführungsform, wie sie in Fig. 3 wiedergegeben ist. Hierbei ist die Lochfolie 4 derart vorgespannt, dass sie in der in Fig. 3 durch einen Doppelpfeil angedeuteten Umfangsrichtung 16 zwischen benachbarten Axialstegen 10 jeweils einen im Wesentlichen geradlinigen Abschnitt 17 aufweist. Insbesondere kann sich die Lochfolie 4 zwischen den Stegen 10 insgesamt im Wesentlichen geradlinig erstrecken. Diese gewünschte Deformation der Lochfolie 4 bezüglich einer exakten kreiszylindrischen Form wird durch die radial vom übrigen Stützkörper 3 nach außen abstehenden Axialstege 10 ermöglicht, die in Umfangsrichtung beabstandete Stützstellen für die Lochfolie 4 bilden.

Durch die aufgespannte Lochfolie 4 wird beim Abreinigen mit Hilfe der Abstreifer 9 eine Wellenbildung und Faltenbildung der Lochfolie 4 vermieden. Dies gilt auch dann, wenn die Abstreifer 9 mit einer relativ großen radialen Vorspannung an der Lochfolie 4 anliegen. Dadurch kann zwar zu einer Deformierung der Lochfolie 4 in den Bereichen 17 zwischen benachbarten Axialstegen 10 erfolgen, führt jedoch nicht zu einer Wellenbildung, da hierdurch die Folie 4 zusätzlich gespannt wird, was einer Wellenbildung entgegenwirkt. Die Lochfolie 4 ist dabei insbesondere elastisch aufgespannt, das heißt, die Dehnung der Folie 4 in Umfangsrichtung 16 erfolgt im federelastischen Bereich des Folienmaterials. Durch die Aufspannung der Folie 4 auf den Axialstegen 10 wird gleichzeitig jegliches Radialspiel eliminiert, das bei herkömmlicher Bauweise zwischen Lochfolie 4 und Stützkörper 3 auftreten kann.

Die Lochfolie 4 kann so ausgestaltet bzw. beschaffen sein sowie so am Stützkörper 3 angebracht sein, dass die Umfangsabschnitte 17, die sich zwischen den Axialstegen 10 erstrecken, im Betrieb der Filtriervorrichtung 1 nach außen, also zur Rohseite 5 hin, konkav gewölbt sind. Diese Wölbung wird dabei durch die im Betrieb der Filtriervorrichtung 1 zwischen Rohseite 5 und Reinseite 6 anliegende Druckdifferenz bewirkt.

Die Lochfolie 4 besitzt somit eine in Umfangsrichtung 16 variierende Außenkontur, in der sich Umfangsabschnitte unterschiedlicher Abstände 14, 15 von der Längsmittelachse 11 sowie unterschiedlicher Geometrie (mehr oder weniger gewölbt bzw. geradlinig) abwechseln. Damit die Abstreifeinrichtung 7 dieser variierenden Umfangsgeometrie der Lochfolie 4 folgen kann, ist der jeweilige Abstreifer 9 radial gegen die Lochfolie 4 vorgespannt. Eine entsprechende radiale Vorspannung ist in Fig. 1 durch einen Pfeil 18 symbolisch angedeutet. Diese Vorspannung 18 kann beispielsweise dadurch realisiert werden, dass der jeweilige Abstreifer 9 federelastisch ausgestaltet ist. Ebenso ist es möglich, eine Halterung 19 des jeweiligen Abstreifers 9 federelastisch auszugestalten oder mittels einer entsprechenden Vorspannfeder, die hier nicht dargestellt ist, radial vorzuspannen. Die Abstreifer 9 können beispielsweise aus Kunststoff hergestellt sein. Hierzu eignet sich beispielsweise ein PU-Kunststoff, bei dem es sich insbesondere um einen PTFE-Kunststoff handeln kann. Besonders vorteilhaft ist eine Ausführungsform, bei welcher sich die einzelnen Abstreifer 9 dadurch voneinander unterscheiden, dass sie mit unterschiedlicher radiale Vorspannung 18 oder Anpressung 18, also mit unterschiedlichen radialen Anpresskräften 18 an der Lochfolie 4 anliegen. Zusätzlich oder alternativ können sich die einzelnen Abstreifer durch unterschiedliche Materialhärten (Shore-Härten) voneinander unterscheiden.

Bei der Lochfolie 4 handelt es sich bevorzugt um eine Metallfolie. Diese kann zum Beispiel aus einer Nickel-Basis-Legierung hergestellt sein. Die einzelnen Löcher der Lochfolie 4 können grundsätzlich beliebige Querschnitte aufweisen. Beispielsweise können kreisförmige Querschnitte vorgesehen sein. Fig. 2 zeigt in einem stark vergrößerten Ausschnitt Langlöcher 21, mit denen die Lochfolie 4 versehen ist. Besonders vorteilhaft ist gemäß Fig. 3 eine Ausgestaltung, bei der die Lochfolie 4 durch eine Kantenlochfolie 4 gebildet ist. Die einzelnen Löcher 22 verjüngen sich dabei von der reinseitigen Innenseite zur rohseitigen Außenseite. Hierdurch werden an der Außenseite der Kantenlochfolie 4 relativ scharfkantige und enge Eintrittsöffnungen geschaffen. In Verbindung mit Langlöchern 21 werden somit Spaltöffnungen, insbesondere Kantenspaltöffnungen realisiert, die sich durch eine besonders effektive Filtrierwirkung auszeichnen. Die Löcher sind dabei vergleichsweise klein. Beispielsweise besitzen sie einen Lochdurchmesser von etwa 200 µm. Bei konischen Öffnungen 22 befinden sich die 200 µm an der Folienaußenseite. Bei in Axialrichtung orientierten Langlöchern 21 befinden sich die 200 µm in der Umfangsrichtung 16.

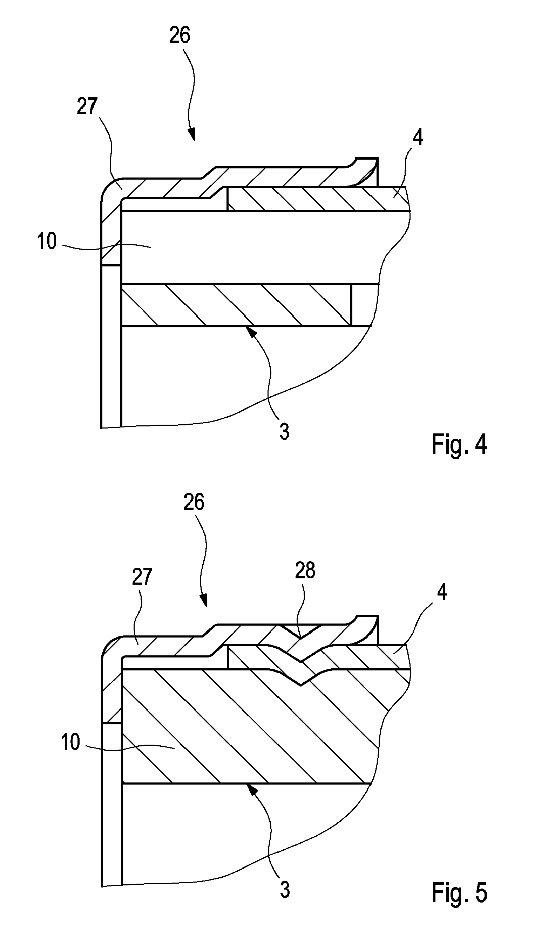

Die Lochfolie 4 ist zweckmäßig stumpfverschweißt. Das bedeutet, dass die Lochfolie 4 aus einer ebenen Lochfolienplatine ausgeschnitten und zu einem Zylinder geformt ist, bei dem die Enden der Lochfolie 4 stirnseitig aneinander stoßen. An diesem Stoß werden die Enden der Lochfolie 4 miteinander verschweißt. Eine entsprechende Schweißnaht ist in Fig. 2 durch eine strichpunktierte Linie angedeutet und mit 24 bezeichnet. Diese Stumpfschweißnaht 24 erstreckt sich dabei parallel zur Längsmittelachse 11 des Filterkörpers 2. Die auf den Stützkörper 3 aufgezogene Lochfolie 4 ist am Stützkörper 3 an dessen axialen Enden 25 jeweils mittels einer Verdrehsicherung 26 fixiert. Diese Verdrehsicherung 26 kann gemäß Fig. 4 mit Hilfe eines Rings 27 realisiert werden, der die Folie 4 übergreifend axial auf den Stützkörper 3 aufgepresst wird. Hierdurch wird eine radiale Verpressung der Folie 4 gegen den Stützkörper 3 erreicht. Zur Verbesserung der Sicherungswirkung kann der Ring 27 im Bereich der Überlappung mit der Folie 4 mit einer Kerbung 28 oder Körnung 28 versehen sein, die durch plastische Deformation einen Formschluss zwischen Stützkörper 3, Lochfolie 4 und Ring 27 erzeugt.

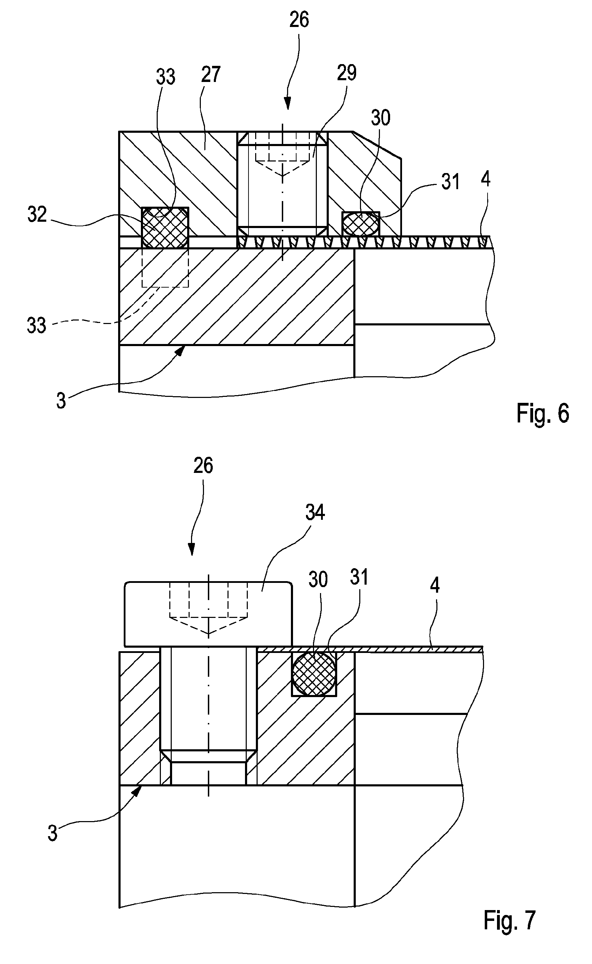

Fig. 6 zeigt eine weitere Variante der Verdrehsicherung 26, bei der ebenfalls ein Ring 27 koaxial zur Längsmittelachse 11 aufgesetzt wird. Dieser Ring 27 übergreift dabei wieder die Lochfolie 4. Bei dieser Ausführungsform ist jedoch der Ring 27 nicht aufgepresst, sondern mit Radialspiel aufgebracht und dafür mit Hilfe von Spannelementen 29, zum Beispiel in Form von Madenschrauben, mit dem Stützkörper 3 verspannt. Dabei können sich die Spannelemente 29 über die Lochfolie 4 am Stützkörper 3 abstützen. Bemerkenswert ist bei dieser Ausführungsform außerdem, dass eine Foliendichtung 30 vorgesehen ist, die insbesondere als Ringdichtung ausgestaltet ist. Die Foliendichtung 30 ist dabei in eine insbesondere ringförmige, Aufnahmenut 31 eingesetzt, die am Ring 27 ausgeformt ist. Zusätzlich kann eine Stützkörperdichtung 32 vorgesehen sein, die zweckmäßig ebenfalls ringförmig ausgestaltet ist. Die Stützkörperdichtung 32 ist zweckmäßig ebenfalls in eine umlaufende Ringnut 33 eingesetzt, die im Beispiel ebenfalls in den Ring 27 eingearbeitet ist, alternativ jedoch auch in den Stützkörper 3 eingearbeitet sein kann.

Fig. 7 zeigt eine weitere Ausführungsform, bei welcher die Verdrehsicherung 26 mit Hilfe von Fixierschrauben 34 realisiert wird, die radial in den Stützkörper 3 eingeschraubt werden und dabei mit ihren nicht näher bezeichneten Köpfen die Lochfolie 4 radial gegen den Stützkörper 3 pressen. Es ist klar, dass mehrere derartige Spannschrauben 34 in Umfangsrichtung verteilt angeordnet sind.

Bei der in Fig. 7 gezeigten Ausführungsform ist wieder eine Foliendichtung 30 vorgesehen, die ebenfalls in eine Ringnut 31 eingesetzt ist. Im Unterschied zu der in Fig. 6 gezeigten Ausführungsform ist bei der in Fig. 7 gezeigten Variante diese Aufnahmenut 31 in den Stützkörper 3 eingearbeitet.

## Patentansprüche

1. Filtriervorrichtung zum Entfernen von Verunreinigungen aus Flüssigkeiten und/oder Pasten, insbesondere hoher Viskosität,
- mit mindestens einem zylindrischen Filterkörper (2), der einen zylindrischen Stützkörper (3) und eine Lochfolie (4) als Filtermaterial aufweist,
- mit einer Abstreifeinrichtung (7) zum Abstreifen von sich im Betrieb der Filtriervorrichtung (1) rohseitig an der Lochfolie (4) anlagernden Verunreinigungen (8),
- wobei der Stützkörper (3) in Umfangsrichtung (16) verteilt mehrere radial nach außen vorstehende Axialstege (10) aufweist, auf welche die Lochfolie (4) von außen so aufgespannt ist, dass sie zwischen den Axialstegen (10) einen Abstand (14) aufweist, der kleiner ist als ein Abstand (15), den die Lochfolie (4) an den Axialstegen (10) von der Längsmittelachse (11) aufweist.

2. Filtriervorrichtung nach Anspruch 1,
**dadurch gekennzeichnet,**
**dass** die Lochfolie (4) so auf den Stützkörper (3) aufgespannt ist, dass sie sich in der Umfangsrichtung (16) zwischen den Stegen (10) im Wesentlichen geradlinig erstreckt oder zwischen den Stegen (10) jeweils einen geradlinigen Umfangsabschnitt (17) aufweist.

3. Filtriervorrichtung nach Anspruch 1 oder 2,
**dadurch gekennzeichnet,**
**dass** die Lochfolie (4) so ausgestaltet ist und/oder so am Stützkörper (3) angebracht ist, dass sie im Betrieb der Filtriervorrichtung (1) aufgrund der anliegenden Druckdifferenz zwischen Rohseite (5) und Reinseite (6) zwischen den Axialstegen (10) nach außen konkav gewölbte Umfangsabschnitte (17) aufweist.

4. Filtriervorrichtung nach einem der Ansprüche 1 bis 3,
**dadurch gekennzeichnet,**
**dass** die Abstreifeinrichtung (7) so ausgestaltet ist, dass sie der in Umfangsrichtung (16) radial variierenden Außenkontur der Lochfolie (4) folgen kann.

5. Filtriervorrichtung nach Anspruch 4,
**dadurch gekennzeichnet,**
**dass** die Abstreifeinrichtung (7) wenigstens einen Abstreifer (9) aufweist, der in Radialrichtung federelastisch ausgestaltet ist oder eine federelastische Halterung (19) aufweist.

6. Filtriervorrichtung nach einem der Ansprüche 1 bis 5,
**dadurch gekennzeichnet,**
**dass** die Abstreifeinrichtung (7) mehrere in Umfangsrichtung (16) verteilt angeordnete Abstreifer (9) aufweist.

7. Filtriervorrichtung nach Anspruch 6,
**dadurch gekennzeichnet,**
**dass** der jeweilige Abstreifer (9) aus Kunststoff, insbesondere aus einem PU-Kunststoff, zum Beispiel aus PTFE, besteht.

8. Filtriervorrichtung nach Anspruch 6 oder 7,
**dadurch gekennzeichnet,**
**dass** sich die Abstreifer (9) durch unterschiedliche Materialhärten und/oder durch unterschiedliche radiale Anpresskräfte (18) voneinander unterscheiden.

9. Filtriervorrichtung nach einem der Ansprüche 1 bis 8,
**dadurch gekennzeichnet,**
**dass** die Lochfolie (4) eine Metallfolie ist, zum Beispiel aus einer Nickel-Basis-Legierung.

10. Filtriervorrichtung nach einem der Ansprüche 1 bis 9,
**dadurch gekennzeichnet,**
**dass** die Lochfolie (4) als Kantenlochfolie ausgestaltet ist.

11. Filtriervorrichtung nach einem der Ansprüche 1 bis 10,
**gekennzeichnet durch** eine Antriebseinrichtung (23) zum Erzeugen einer Drehbewegung um die Längsmittelachse (11) des Filterkörpers (2) zwischen dem Filterkörper (2) und der Abstreifeinrichtung (7).

12. Filtriervorrichtung nach einem der Ansprüche 1 bis 11,
**dadurch gekennzeichnet,**
**dass** die Lochfolie (4) stumpfverschweißt ist.

13. Filtriervorrichtung nach einem der Ansprüche 1 bis 12,
**dadurch gekennzeichnet,**
**dass** an wenigstens einem axialen Endbereich des Filterkörpers (2) eine Verdrehsicherung (26) vorgesehen ist, welche die Lochfolie (4) am Stützkörper (3) fixiert.

14. Filtrierkörper für eine Filtriervorrichtung (1) nach einem der Ansprüche 1 bis 13.
